# EUROPEAN PATENT APPLICATION

(11) **EP 1 484 916 A2**
(43) Date of publication of application: **08.12.2004**
(21) Application number: 04102507.3
(22) Date of filing: 03.06.2004
(51) Int. Cl.: H04N 5/77

(54) **Camera Apparatus**

(30) Priority: 03.06.2003 KR 2003035770
(71) Applicant: Samsung Electronics Co., Ltd., Suwon-si, Gyeonggi-do 442-742 (KR)
(72) Inventor: Kim, Yong-ho, Geumcheon-gu Seoul, (KR); Lee, Yong-hyu 223-1104, 1053-2, Hwanggol-maeul, Suwon-shi, Gyeonggi-do (KR)
(74) Representative: Read, Matthew Charles

(57) **Abstract**

A photographing apparatus capable of automatically setting a resolution and a method thereof. The photographing apparatus has a digital video camera unit (202) to photograph a motion picture, a DVC signal processing block (112), first and second resolution converting units (171, 172) to convert the digital motion picture data to first and second resolutions, respectively, first and second compressing units (182, 183) to compress the output data from the first and second resolution converting units (171, 172) to first and second format data, first and second recording media (121, 122) to store first and second format data, respectively, a recording medium selecting switch (131) to select one among the first and second recording media (121, 122), and a control unit (140) to control such that the digital motion picture data can be transmitted to one among the first and second resolution converting units (171, 172). Accordingly, the memory space of the recording medium can be used efficiently, and the user is not inconvenienced by having to set the resolution every time he/she selects the recording medium to use.

## Description

The present invention relates to a camera apparatus comprising moving image-capturing means, means for receiving a solid state memory device, a deck for receiving a video cassette and processing means configured to selectively output image data from the moving image-capturing means to the means for receiving a solid state memory device or the deck.

In general, digital still cameras (DSCs) convert images received through lenses into digital signals and store the digital signals on recording media, such as hard disks or memory cards. More specifically, instead of recording images on film, DSCs can store images on recording media and transfer the digital images directly to a computer without using other devices, such as scanners. Since DSCs are highly compatible with personal computers (PC), DSCs make editing or correcting images easy. In addition, DSCs can be connected to external computers to transmit the captured images. Furthermore, DSCs are similar in structure to general cameras, so DSCs are convenient to carry. A known type of DSC includes a lens device, a memory device, a signal converter and a display. However, due to limitations in the memory capacity of recording media, DSCs are usually only used for capturing still images. Although DSCs are capable of capturing motion pictures, motion pictures require extensive storage capacity and, therefore, only a very limited-duration motion picture can be stored on current memory devices. Therefore, DSCs are not effective for capturing motion pictures. Besides, since many DSCs do not have any means for recording and reproducing sound, it is somewhat ineffective to use DSCs for recording and reproducing motion pictures. In order to compensate for these shortcomings of DSCs, DSCs equipped with image and sound recording and reproducing means have been suggested. For example, a camcorder records and reproduces images and sounds on a recording medium such as a tape. A digital video camera (DVC) is another example of such a device.

A known type of DVC includes a lens device, a signal converter, a deck device for recording and reproducing captured images and a display. Such a DVC usually uses a cassette tape as a recording medium and, therefore, the cassette tape is usually mounted on the deck device to record motion pictures as they are captured. Additionally, DVCs are provided with microphones and speaker devices and are capable of recording with the cassette tape for more than 1 hour. DVCs can also photograph still images. However, because they have lower resolution and image quality compared to DSCs, DVCs are mainly used for capturing motion pictures. Furthermore, because DVCs have more complex functions and construction than DSCs, DVCs are usually larger in size and more expensive than DSCs.

Accordingly, in order to photograph motion pictures as well as still images, a customer usually purchases both a DSC and a DVC. As a result, the customer suffers the financial burden of having to buy two expensive devices. Furthermore, the customer has to carry both a DSC and a DVC to use them.

In an effort to resolve the above-mentioned problem, an integrated DSC/DVC, or digital camera/camcorder (also known as a 'DUOCAM') in which a DSC and a DVC are integrated into a single casing, has been developed.

The DUOCAM uses both a memory card and a magnetic tape as recording media for storing images or motion pictures and, accordingly, the user may select either of the two to record the images he or she is photographing. Memory cards have the advantage that they are compact-sized and can be directly connected to a PC either using a reader or via a cable connection to the DUOCAM, which enables easy transmission of data. However, memory cards have relatively small memory capacities. Magnetic tapes have large memory capacities, but cannot compare to memory cards when it comes to compactness and data transmission efficiency. Therefore, from the point of view of efficient space utilization, it is more efficient to store low resolution images on the memory card, i.e. to store data with a small volume on the memory card, while images of high resolution are stored on the magnetic tape, which has a relatively large memory capacity. As described above, the DUOCAM needs a function to automatically select the resolution of the recorded images in accordance with a recording medium selection made by the user.

Otherwise, the user has to select the resolution in addition to the recording medium, which is undesirably time consuming.

A camera apparatus, according to the present invention, characterised in that the processing means is configured to selectively set the resolution of said image data to a first or a second resolution according to whether said image data is output to the means for receiving a solid state memory device or the deck.

Preferably, the first resolution is lower than the second resolution.

Embodiments of the present invention will now be described, by way of example, with reference to the accompanying drawings, in which:
Figure 1 is a perspective view of a camera apparatus according to the present invention;
Figure 2 is a block diagram showing a camera apparatus according to the present invention;
Figures 3A to 3E illustrate the respective positions of the image-capturing unit of Figure 1 when a user rotates the image-capturing unit in 45-degree steps in a clockwise direction;
Figures 4A and 4B show menu screens for use in setting the resolution of the DSC unit of Figure 2;
Figures 5A and 5B illustrate menu screens for use in setting a recording medium of the camera apparatus of Figure 1;
Figure 6 is a perspective view showing an example of the mode selection switch unit of the camera apparatus of Figure 2;
Figure 7 shows the case where the DSC unit of the camera apparatus is selected by the mode selection switch unit of Figure 6;
Figure 8 is a perspective view showing another example of the mode selection switch unit of the camera apparatus of Figure 2;
Figure 9 shows the case where no camera unit is selected by the mode selection switch unit of Figure 8;
Figure 10 shows yet another example of the mode selection switch unit of the camera apparatus of Figure 2; and
Figure 11 is a flowchart showing a method of operation of the camera apparatus of Figure 1.

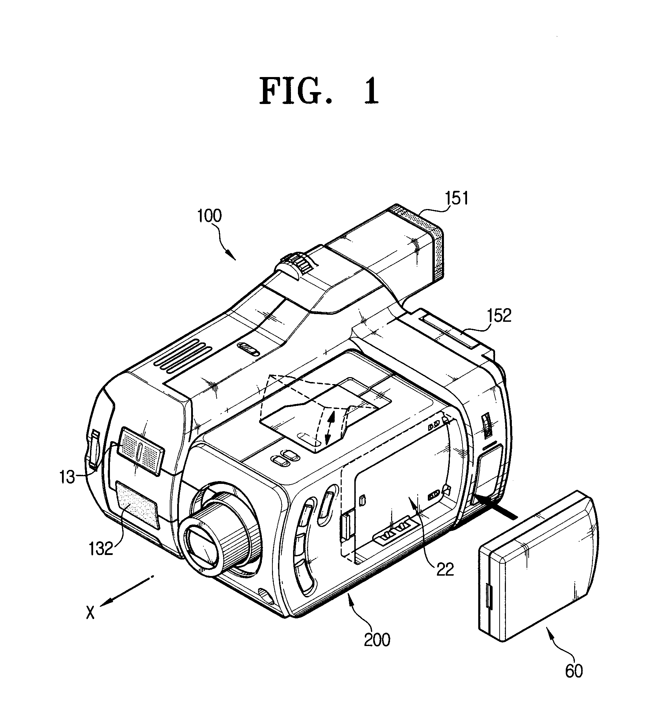

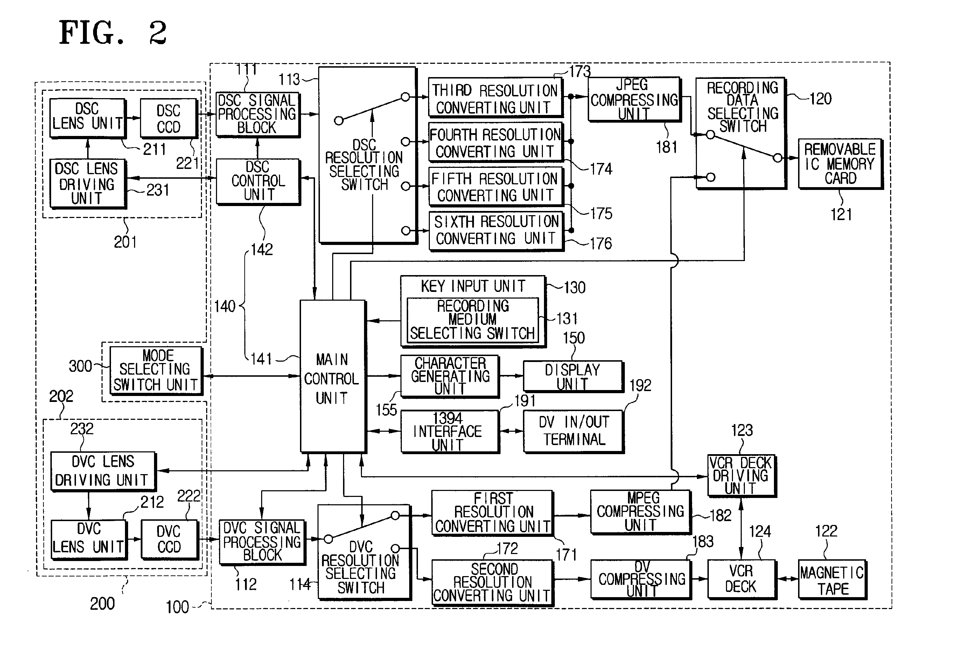

Referring to Figures 1 and 2, the camera apparatus (or photographing apparatus) comprises a main body 100, an image-capturing unit (or complex camera unit) 200 connected to the main body 100 and a mode selection switch unit 300.

Referring to Figure 2, the image-capturing unit 200 comprises a digital still camera (DSC) unit 201 and a digital video camera (DVC) unit 202. The DSC unit 201 and the DVC unit 202 are for different image types and, therefore, they are driven independently from each other. The DSC unit 201 comprises a DSC lens unit 211, a DSC CCD 221 and a DSC lens driving unit 231, and the DVC unit 202 comprises a DVC lens unit 212, a DVC CCD 222 and a DVC lens driving unit 232.

The DSC lens driving unit 231 drives the DSC lens unit 211 in accordance with control signals from the DSC control unit 142. An optical image, which is converged using the DSC lens unit 211, is photoelectrically converted into electric signals at the DSC CCD 221 and the converted signals are transmitted to the DSC signal processing block 111. The DSC CCD 221 preferably uses progressive scanning.

The DVC lens driving unit 232 drives the DVC lens unit 212 in accordance with control signals from the main control unit 141. An optical image, which is converged using the DVC lens unit 212, is photoelectrically converted into electric signals at the DVC CCD 222 and the converted signals are transmitted to the DVC signal processing block 112. The DVC CCD 222 preferably uses interlace scanning.

The image-capturing unit 200 is mounted such that, it can be rotated by a user about a Z-axis by more than about 180° with respect to the main body 100. One of the DSC unit 201 and the DVC unit 202 of the image-capturing unit 200 performs image-capturing in dependence on the rotation angle of the image-capturing unit 200 with respect to the main body 100. More specifically, whichever camera unit is positioned within the range, which projects in a forward direction between ±45° with respect to an X-axis performs image-capturing.

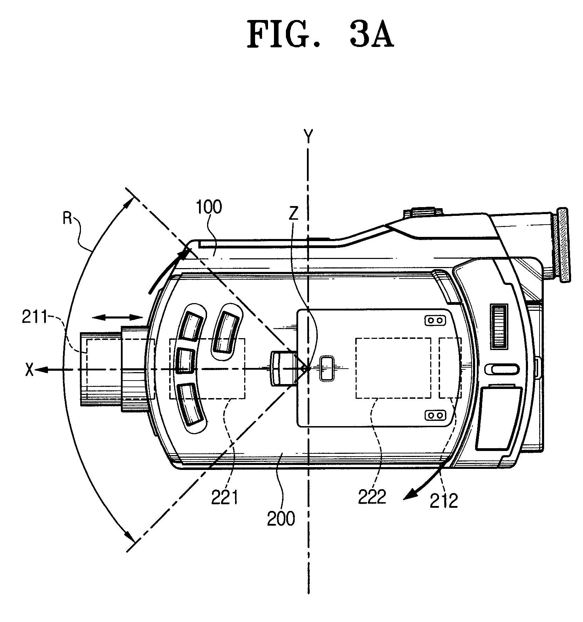

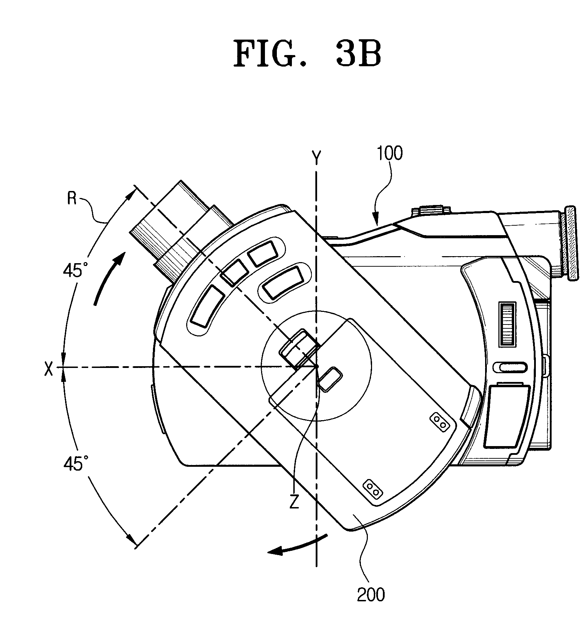

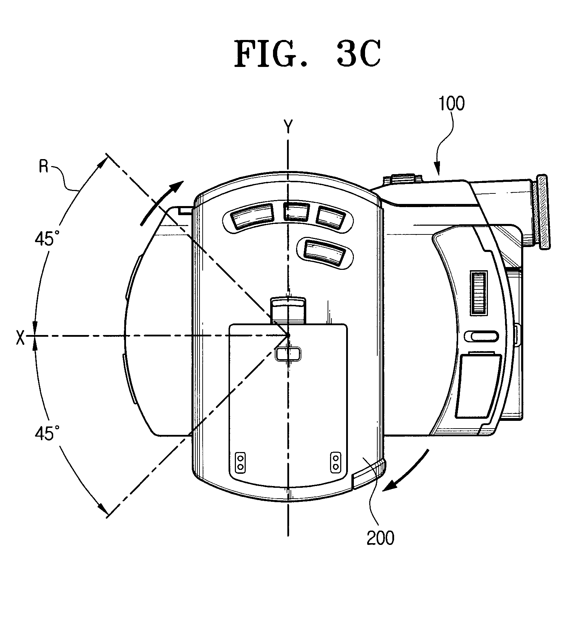

Referring to Figure 3A, the elements shown as dotted lines represent the DSC lens unit 211, the DSC CCD 221, the DVC lens unit 212 and the DVC CCD 222 respectively, which are installed inside the image-capturing unit 200. For the convenience of explanation, the DSC lens driving unit 231 and the DVC lens driving unit 232 are omitted from the drawing. Referring to Figures 3A and 3B, the DSC is in an operation mode in which the DSC unit 201 performs image-capturing, because the DSC lens unit 211 and the DSC CCD 221 are positioned within the range R, which projects in a forward direction between ±45 degrees with respect to an X-axis. Referring to Figure 3C, there is no camera unit positioned within the range R, which projects in a forward direction between ±45 degrees with respect to an X-axis. Accordingly, neither camera unit is positioned to perform image-capturing.

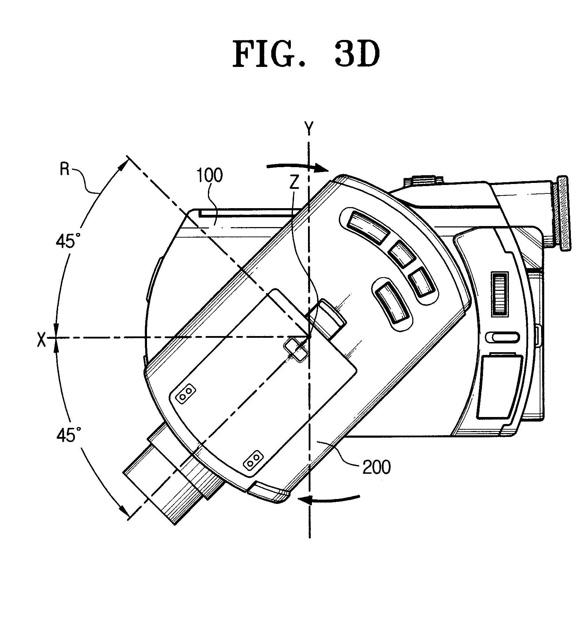

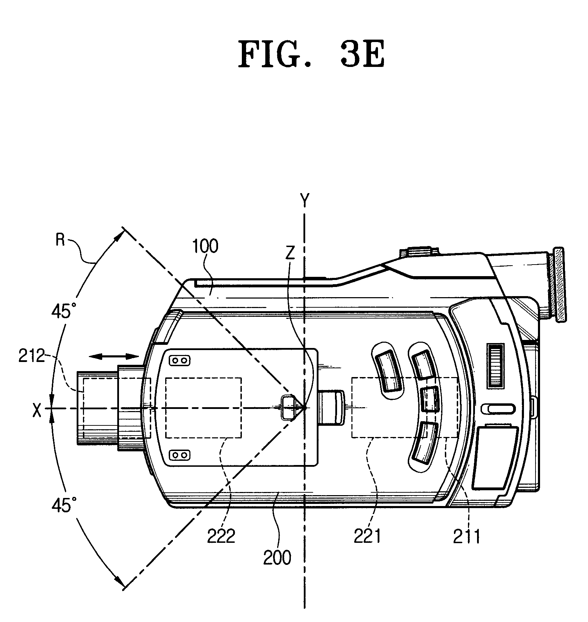

Referring to Figures 3D and 3E, the DVC lens unit 212 and the DVC CCD 222 are positioned within the range R of ±45° with reference to the left side of the X-axis. Accordingly, the DVC unit 202, which is positioned within the range R of ±45° with reference to the left side of the X-axis, performs image-capturing.

Referring to Figures 1 and 2, the main body 100 of the camera apparatus may house respective components of the camera apparatus, except the components of the image-capturing unit 200 and the mode selection switch unit 300.

The DSC signal processing block 111 processes signals from the D SC CCD 221 in frame units and outputs digital still image data. The DSC signal processing block 111 may modify colour, colour depth, colour brightness and shutter speed settings during image-capturing, in response to control signals from the DSC control unit 142.

A third resolution converting unit 173 is provided for converting the digital still image data received from the DSC signal processing block 111 to 2272x1704 resolution. Also, a fourth resolution converting unit 174 for converting the digital still image data to 2272x1504 resolution, a fifth resolution converting unit 175 for converting to 1600×1200 resolution and a sixth resolution converting unit 176 to convert to 640×480 resolution are provided.

A JPEG compression unit 181 compresses the data received from the DSC signal processing block 111 to JPEG formatted data. The JPEG formatted data is stored on a removable IC memory card 121.

The DVC signal processing block 112 processes signals from the DVC CCD 222 in field units and outputs digital motion picture data. The DVC signal processing block 112 can modify colour, colour depth, colour brightness and shutter speed settings, in response to control signals from the main control unit 141.

A first resolution converting unit 171 converts digital motion picture data received from the DVC signal processing block 112 to 320x240 resolution. An MPEG compression unit 182 compresses the received data from the first resolution converting unit 171 to MPEG formatted data. The MPEG formatted data is stored on a removable IC memory card 121.

Alternatively, a second resolution converting unit 172 converts digital motion picture data received from the DVC signal processing block 112 to 740x480 resolution. A DV compression unit 183 compresses the data received from the second resolution converting unit 172 to DV formatted data and the DV formatted data is stored on the magnetic tape 122 using a VCR deck 124.

Referring to Figure 1, a speaker 13 for outputting reproduced sound and a microphone 132 for acquiring external sound are provided on a part of the main body 100 facing in the image-capturing direction X.

Regarding the recording media, there is an IC memory card 121 and a magnetic tape 122. The IC memory card 121 can directly connect to a PC, which enables easy data transmission. However, having a relatively small memory capacity, the IC memory card 121 is usually used for the storage of a small-volume of data. The IC memory card 121 is one type of recording medium, which is usually formed as a card. The IC memory card 121 has one or more semiconductor memories contained in the casing and an interface connector provided at an end, which is usually used to expand memory capacity. The IC memory card 121 can be categorized depending on the type of the memories contained therein, such as a RAM card, a flash memory card or a non-volatile semiconductor memory card. Meanwhile, the magnetic tape 122 is inserted in the VCR deck 124, which is driven by the VCR deck driving unit 123, and has a larger memory capacity than the IC memory card 121.
A character generating unit 155 receives a control signal from the main control unit 141 and accordingly generates certain letters at corresponding positions on the display unit 150.

An IEEE-1394 interface unit 191 is used to exchange data with other external devices and is usually used for interfacing with a PC. In other words, the digital image data can be transmitted to the PC via the IEEE-1394 interface unit 191 and the digital image data can also be recorded from the PC to the magnetic tape 122.

Referring back to Figure 1, the display unit 150 includes a viewfinder 151, which is provided on the main body 100 for displaying captured images, and an LCD panel 152, which is also provided on the main body 100.

Still images, captured by the DSC, are stored on the removable IC memory card 121. The user is able to select the resolution for the still images being stored using a DSC resolution selecting unit (not shown). At higher resolutions, the data size increases and, thus, the number of photos that can be stored decreases. With a lower resolution, the data size decreases and, therefore, the number of photos that can be stored increases. For example, when the storage capacity of the removable IC memory card 121 is 32MB and the resolution is 2272x1704, approximately 52 photos can be stored. With the resolution set at 640x480, approximately 360 photos can be stored.

The DSC resolution selecting unit may comprise a key input unit 130, a character generating unit 155 and a display unit 150. The key input unit 130 is provided with a menu key for inputting a command to display a menu screen on the display unit 150, a direction key for moving a cursor with respect to the items selectively arranged on the menu screen and a selection key for selecting the item where the cursor is placed. When the user presses the menu key, the key input unit 130 transmits a menu display signal to the main control unit 141. Likewise, when the user presses on the direction key, the key input unit 130 transmits a cursor moving signal to the main control unit 141 and when the user presses the selection key the key input unit 130 transmits an item selection signal. Upon receiving the menu display signal, the main control unit 141 controls the character generating unit 155, which displays a menu screen on the display unit 150. Upon receiving a cursor moving signal, the main control unit 141 controls the character generating unit 155 to move the cursor displayed on the display unit 150. Upon receiving the item selection signal, the main control unit 141 controls the character generating unit 155 to show a sub-menu of the item on the display unit and, in the absence of a sub-menu, the main control unit 141 performs the operations corresponding to the menu items.

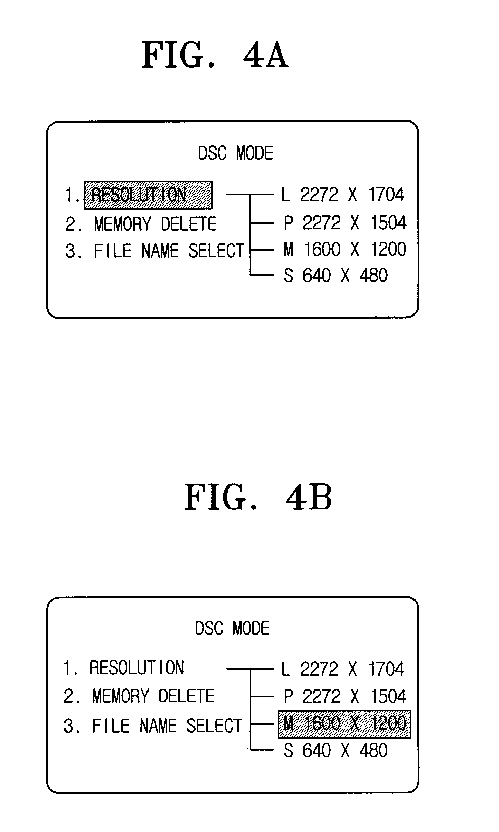

Referring to Figure 4A, when the user presses the menu display key while the camera apparatus is operated in the DSC operation mode, the DSC menu screen is displayed on the display unit 150. Additionally, when the cursor is placed on the item '1. resolution' and the selection key is pressed, the sub-menu of the item '1. resolution', i.e. '(1) L2272×1704', '(2) P2272×1504', '(3) M1600 × 1200' and '(4) S640x480' is displayed. Referring to Figure 4B, when the user uses the direction key to place the cursor on the sub-item '(3) M1600 × 1200' and the selection key is pressed, the still image data is converted to 1600x1200 resolution under the control of the main control unit 141.

The motion pictures captured by the DVC are selectively stored on the removable IC memory card 121 or the magnetic tape 122, in accordance with a storage path that is set by the user as he/she likes. In other words, the recording medium selecting switch 131 outputs a memory recording mode signal or a tape recording mode signal to the main control unit 141 in accordance with the selection made by the user.

The user may select a recording medium using a recording medium setting unit (not shown), which includes the key input unit 130, the character generating unit 155 and the display unit 150. The functions of the respective parts are identical to those as described above in the description of the DSC resolution selecting unit.

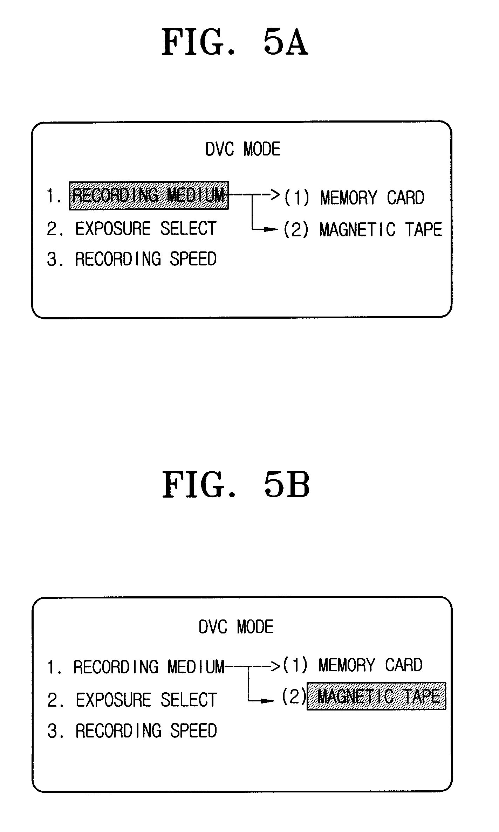

Referring to Figure 5A, when the user presses the menu display key while the camera apparatus is operated in the DVC operation mode, the DVC menu screen is displayed on the display unit 150. When the user places the cursor on the item '1. recording medium' and presses the selection key, the sub-menus of the '1. recording medium' item, such as '(1) memory card' and '(2) magnetic tape', are displayed. Referring to Figure 5B, when the user places the cursor on the sub-item '(2) magnetic tape' and presses the selection key, the main control unit 141 sets a storage path such that captured motion pictures are stored on the magnetic tape 122.

Referring again to Figure 2, the main control unit 141 and the DSC control unit 142 constitute a control unit 140. The main control unit 141 determines whether the current operation mode is the DSC operation mode or the DVC operation mode based on an operation mode signal received from the mode selection switch unit 300. When operating in the DSC operation mode, the main control unit 141 controls the DSC control unit 142, which controls the DSC lens driving unit 231 and the DSC signal processing block 111, respectively. Accordingly, an optical image captured using the DSC lens unit 211 is photoelectrically converted into electrical signals at the DSC CCD 221 and the converted signals are converted into digital still image data at the DSC signal processing block 111. The main control unit 141 changes the resolution of the output digital still image data based on a signal received from the DSC resolution selecting unit. In other words, the main control unit 141 controls the digital still image data output from the DSC signal processing block 111 to be transmitted to any one of the third to sixth resolution converting units in dependence on the DSC resolution selecting switch 113. Digital still image data transmitted to the third resolution converting unit 173 is converted to 2272x1704 resolution and digital still image data transmitted to the fourth resolution converting unit 174 is converted to 2272x1504 resolution. Digital still image data transmitted to the fifth resolution converting unit 175 is converted to 1600x1200 resolution and digital still image data transmitted to the sixth resolution converting unit 176 is converted to 640x480 resolution. The converted data is compressed to JPEG formatted data at the JPEG compression unit 181. The main control unit 141 controls the JPEG formatted data from the JPEG compression unit 181 to be stored on the removable IC memory card 121 in dependence on the stored data selecting switch 120.

When it is determined that the camera apparatus operates in the DVC operation mode, the main control unit 141 controls the DVC lens driving unit 232 and the DVC signal processing block 112 so that the optical image converged through the DVC lens unit 212 can be photoelectrically converted to electrical signals at the DVC CCD 222 and converted to digital motion picture data at the DVC signal processing block 112. The main control unit 141 determines whether the current recording mode is the memory recording mode or the tape recording mode based on a recording mode signal received from the recording medium switch 131 or from the recording medium setting unit (not shown). When it is determined that the memory recording mode is the current recording mode, the main control unit 141 manipulates the DVC resolution selecting switch 114 so that the digital motion picture data output from the DVC signal processing block 112 can be transmitted to the first resolution converting unit 171. The first resolution converting unit 171 converts the digital motion picture data to 320x240 resolution. The data output from the first resolution converting unit 171 is compressed to MPEG formatted data at the MPEG compressing unit 182. The main control unit 141 controls the recording data selecting switch 120 so that the MPEG formatted data can be stored on the removable IC memory card 121. When it is determined that the tape recording mode is the current recording mode, the main control unit 141 controls the DVC resolution selecting switch 114 so that the digital motion picture data output from the DVC signal processing block 112 can be transmitted to the second resolution converting unit 172. The second resolution converting unit 172 converts the digital motion picture data to 720X480 resolution. The data output from the second resolution converting unit 172 is compressed to DV formatted data at the DV compressing unit 183 and stored on the magnetic tape 122 using the VCR deck 124.

The mode selection switch unit 300 operates in association with the image-capturing unit 200. The mode selection switch unit 300 outputs an operation mode signal corresponding to the rotation angle of the image-capturing unit 200 to the main control unit 141 and the main control unit 141 determines the current operation mode using the received operation mode signal.

As shown in Figure 3A, when the DSC lens unit 211 and the DSC CCD 221 are positioned within the range R, which projects in a forward direction between ±45 degrees with respect to an X-axis, the mode selection switch unit 300 outputs a DSC operation mode signal to the main control unit 141 and the control unit 140 operates the DSC unit 201, while keeping the DVC unit 202 off. Alternatively, when the DVC lens unit 212 and the DVC CCD 222 are positioned within the range R, which projects in a forward direction between ±45 degrees with respect to an X-axis, the mode selection switch unit 300 outputs a DVC operation mode signal to the main control unit 141 and, accordingly, the control unit 140 operates the DVC unit 202 while keeping the DSC unit 201 off.

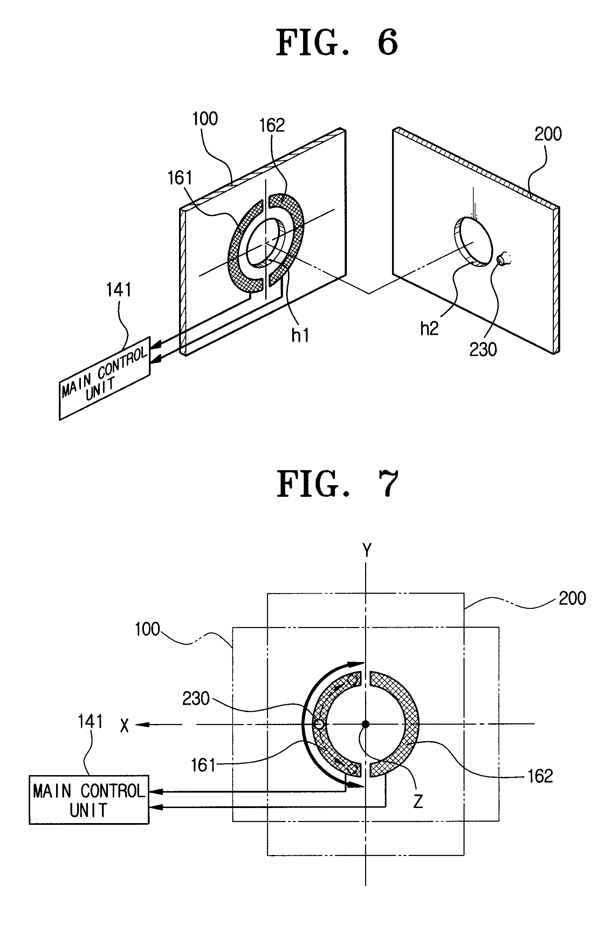

Referring to Figure 6, the mode selection switch unit 300 comprises first and second connection patterns 161, 162 provided on the main body 100 and a connection terminal 230 provided on the image-capturing unit 200 for contacting either one of the two connection patterns 161, 162. In the above-mentioned construction, the main body 100 and the image-capturing unit 200 are rotatably coupled to each other such that the holes h1 and h2 are opposite each other. The connection terminal 230 contacts either the first connection pattern 161 or the second connection pattern 162 in accordance with the rotation angle of the image-capturing unit 200 with respect to the main body 100. The first connection pattern 161 is connected to a first port of the main control unit 141 and the second connection pattern 162 is connected to a second port of the main control unit 141.

Referring to Figure 7, the DSC unit 201 is selected by the mode selection switch unit 300 when the connection terminal 230 contacts the first connection pattern 161. When the rotation angle of the image-capturing unit 200 is within a first angular range and, more specifically, within a range that projects in a forward direction between ±90 degrees with respect to an X-axis, a binary signal of '1' corresponding to a DSC operation mode signal for operating the DSC unit 201 is output to the first port of the main control unit 141. A binary signal of '0' is output to the second port of the main control unit 141. As a result, the DSC operation mode in which the DSC unit 201 performs image-capturing is selected and the control unit 140 operates the DSC unit 201 while keeping the DVC unit 202 off.

When the connection terminal 230 contacts the second connection pattern 162 after the image-capturing unit 200 has been rotated. The connection terminal 230 is within a range that projects in a backward direction between ±90 degrees with respect to an X-axis. At this position, a binary signal of '1' corresponding to a DVC operation mode signal is output to the second port of the main control unit 141 and a binary signal of '0' is output to the first port of the main control unit 141.

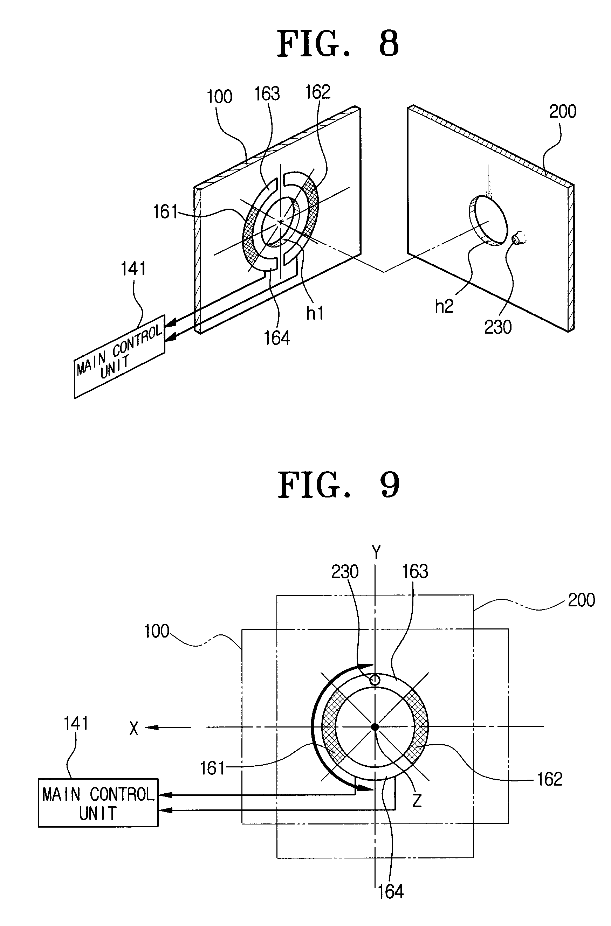

Referring to Figure 8, the mode selection switch unit 300 comprises third and fourth connection patterns 163, 164 in addition to the first and second connection patterns 161, 162 of the main body 100 and is constructed such that the connection terminal 230 which is provided on the image-capturing unit 200 comes into contact with one of the connection patterns 161, 162, 163, 164. The connection terminal 230 contacts one of the first to fourth connection patterns 161, 162, 163, 164 in dependence on the rotation angle of the image-capturing unit 200 with respect to the main body 100. The first connection pattern 161 is connected to the first port of the main control unit 141, the second connection pattern 162 to the second port, and the third and fourth connection patterns 163, 164 are not connected to the ports of the main control unit 141.

Referring to Figure 9, the connection terminal 230 contacts the third connection pattern 163 when the rotation angle of the image-capturing unit 200 falls within a third range, which projects upwards between ±45° with respect to a Y-axis. In this position, no operation mode signal is output to the ports of the main control unit 141. The same situation applies to the case where the connection terminal 230 contacts the fourth connection pattern 164. Accordingly, in the absence of an operation mode signal, the control unit 140 turns off the camera unit and, therefore, neither the DSC unit 201 nor the DVC unit 202 is operated.

Here, it is assumed that the first to fourth connection patterns 161, 162, 163, 164 are arranged at 90° intervals. In this case, when the connection terminal 230 is positioned within the range that projects in a forward direction between ±45 degrees with respect to an X-axis, the DSC unit 201 is operated. When the connection terminal 230 is positioned within the range that projects in a backward direction between ±45 degrees with respect to an X-axis, the DVC unit 202 is operated. No camera unit is operated when the connection terminal 230 is positioned within a range that projects either in an upward or downward direction between ±45 degrees with respect to a Y-axis. As described above, both of the camera units are in an off state when the connection terminal 230 is positioned within a range that projects either in an upward or downward direction between ±45 degrees with respect to a Y-axis. This is to prevent the undesirable collision of the DSC or DVC lens units 211, 212 with the main body 100 in the case that the user selects a zoom function and rotates the image-capturing unit 200 with the DSC 211 and DVC 212 lens units extended.

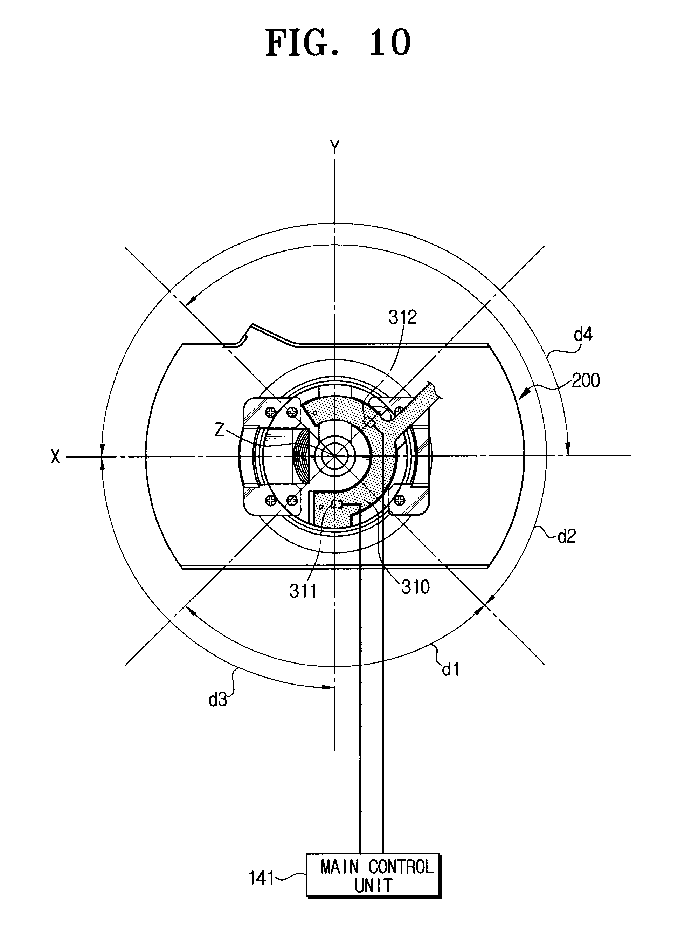

Referring to Figure 10, a mode switch unit 310 is provided on a contact surface between the image-capturing unit 200 and the main body 100 and a DSC mode switch 311 and a DVC mode switch 312 are provided on the mode switch unit 310. The DSC mode switch 311 is connected to the first port of the main control unit 141 and the DVC mode switch 312 is connected to the second port of the main control unit 141. As the image-capturing unit 200 is rotated with respect to the main body 100, the mode switch unit 310, the DSC mode switch 311 and the DVC mode switch 312 are also rotated altogether.

The DSC mode switch 311 rotates and switches within the ranges d1 and d2. When the DSC mode switch 311 is positioned within the range d1, that is, within an angular range that projects downward between ±45° of a Y-axis, a binary signal of '1' corresponding to a DSC operation mode signal to operate the DSC unit 201 is output to the first port of the main control unit 141. A binary signal of '0' is output to the second port of the main control unit 141. The DVC mode switch 312 rotates and switches within the ranges d3 and d4. When the DVC mode switch 312 is positioned within the range d3, that is, within an angular range of 90° with respect to the right side of the lower part of a Y-axis, a binary signal of '1' of DVC operation mode signal to operate the DVC unit 202 is output to the second port of the main control unit 141 and a binary signal of '0' is output to the first port of the main control unit 141.

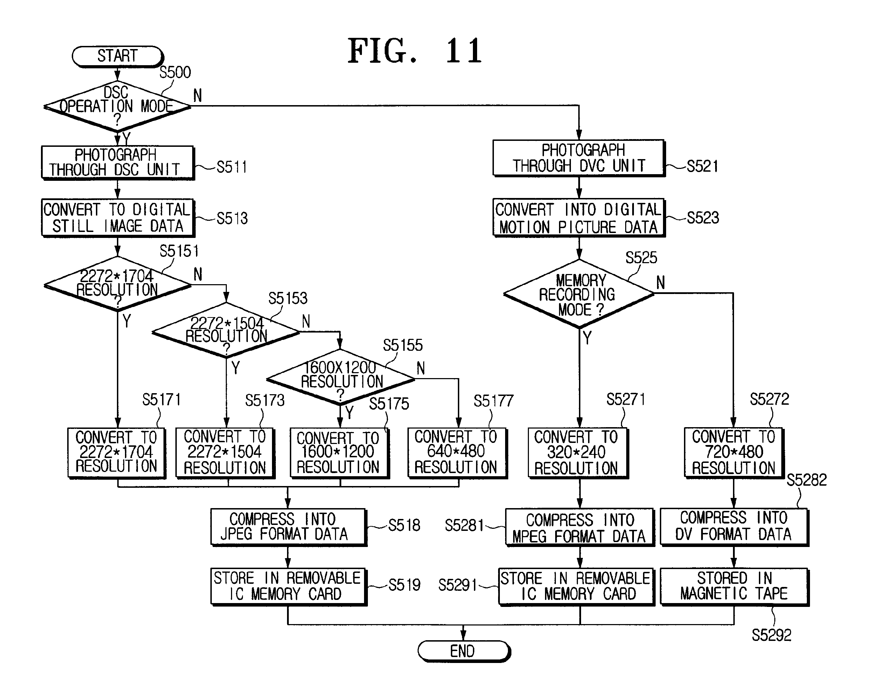

Referring to Figure 11, the main control unit 141 determines the operation mode based on the operation mode signal received from the mode selection switch unit 300 (S500).

When it is determined that the DSC operation mode has been selected in S500, the DSC CCD 221 photoelectrically converts the optical image converged through the DSC lens unit 211 into electrical signals. The electrical signals are then transmitted to the DSC signal processing block 111 (S511). The DSC signal processing block 111 converts the signals to digital still image data (S513). The main control unit 141 sets a desired resolution (S5151, S5153, S5155) based on the signals received from the DSC resolution selecting unit. The digital still image data, which is output from the DSC signal processing block 111, is converted to one resolution from among the resolutions of 2272×1704, 2272x1504, 1600x1200 and 640x480 (S5171, S5173, S5175, S5177). The JPEG compressing unit 181 compresses the converted data to JPEG formatted data (S518). The JPEG formatted data is stored on the removable IC memory card 121 (S519).

When it is determined that the DVC operation mode has been selected in S500, the DVC CCD 222 photoelectrically converts the optical image converged through the DVC lens unit 212 into electrical signals and transmits the signals to the DVC signal processing block 112 so that the DVC signal processing block 112 can convert the received signals into digital motion picture data (S521, S523). The main control unit 141 sets the recording mode (S525) based on a recording mode signal received from the recording medium selecting switch 131 or the recording medium setting unit (not shown). When it is determined that an IC memory recording mode is selected in S525, the digital motion picture data output from the DVC signal processing block 112 is converted to 320x240 resolution (S5271). The converted data is then compressed to MPEG formatted data at the MPEG compressing unit 182 (S5281). The MPEG formatted data is stored on the removable IC memory card 121 (S5291). Furthermore, when it is determined that a tape recording mode is selected in S525, the digital motion picture data output from the DVC signal processing block 112 is converted to 720x480 resolution (S5272). The converted data is compressed to digital video (DV) formatted data at the DV compressing unit 183 (S5282). Then the DV formatted data is stored on the magnetic tape using the VCR deck 124 (S5292).

As described above, in storing the images on the camera apparatus having a plurality of different recording media, the resolution is automatically selected depending on the user selection of the recording medium. More specifically, because a higher resolution is automatically set for the recording medium with a large memory capacity and a lower resolution is automatically set for the recording medium with a smaller memory capacity, the user does not have to set the resolution every time he/she selects the recording medium to use.

## Claims

1. A camera apparatus comprising moving image-capturing means (202), means for receiving a solid state memory device, a deck (124) for receiving a video cassette and processing means configured to selectively output image data from the moving image-capturing means (202) to the means for receiving a solid state memory device or the deck (124), **characterised in that** the processing means is configured to selectively set the resolution of said image data to a first or a second resolution according to whether said image data is output to the means for receiving a solid state memory device or the deck (124).

2. An apparatus according to claim 1, wherein the first resolution is lower than the second resolution.

3. A photographing apparatus comprising:
a plurality of different recording media;
a media selector that selects a specific medium from the plurality of different recording media on which to record the photographed image;
wherein the photographed image is stored at a lower resolution if the media selector selects a first recording medium; and
wherein the photographed image is stored at a higher resolution if the media selector selects a second recording medium.

4. A photographing apparatus of claim 3, further comprising:
a resolution selector to select a resolution from a plurality of resolutions at which to store the photographed image.

5. A photographing apparatus of claim 3, wherein said first recording medium is an integrated chip memory.

6. A photographing apparatus of claim 5, wherein said first recording medium is removable for said photographing apparatus.

7. A photographing apparatus of claim 3, wherein said second recording medium is a magnetic tape.

8. A method of setting the resolution of a photographed image comprising the steps of:
selecting the medium on which to record the photographed image from a plurality of recording media;
storing the photographed image at a lower resolution if a first recording medium is selected in the selecting step; and
storing the photographed image at a higher resolution if a second recording medium is selected in the selecting step.

9. A method of claim 8, further comprising the step of:
selecting a resolution from a plurality of resolutions at which to store the photographed image after the medium is selected.

10. A method of claim 8, wherein said first recording medium is an integrated chip memory.

11. A method of claim 10, wherein said first recording medium is removable for said photographing apparatus.

12. A method of claim 8, wherein said second recording medium is a magnetic tape.

13. A photographing apparatus, comprising:
a digital video camera for capturing motion picture data;
a digital still camera for capturing still picture data;
a media selector for selecting one of the plurality of different storage media to store picture data;
a resolution selector for selecting one of a plurality of resolution converting units based upon the storage medium selected by said media selector;
wherein each of said selected resolution converting units convert the picture data to a particular resolution; and
a controller for controlling storing the converted data on the selected storage medium.

14. A photographing apparatus of claim 13, wherein the plurality of different media comprise an integrated chip memory and a magnetic tape.

15. A photographing apparatus of claim 14, wherein the resolution converting unit selected by the resolution selector converts the picture data to a low resolution when the media selector selects the integrated chip memory as the storage medium.

16. A photographing apparatus of claim 14, wherein the resolution converting unit selected by the resolution selector converts the picture data to a high resolution when the media selector selects the magnetic tape as the storage medium.
